# EUROPÄISCHE PATENTSCHRIFT

(11) **EP 1 864 874 B1**
(45) Veröffentlichungstag und Bekanntmachung des Hinweises auf die Patenterteilung: **13.10.2010**
(21) Anmeldenummer: 07005889.6
(22) Anmeldetag: 22.03.2007
(51) Int. Cl.: B60S 3/06

(54) **Fahrzeugwaschanlage**
Vehicle washing bay
Installation de lavage de voitures

(30) Priorität: 06.06.2006 DE 102006027308
(43) Veröffentlichungstag der Anmeldung: 12.12.2007
(73) Patentinhaber: Alfred Kärcher GmbH & Co. KG, 71364 Winnenden (DE)
(72) Erfinder: Nothacker, Frank, 75387 Oberhaugstett (DE)
(74) Vertreter: Hoeger, Stellrecht & Partner Patentanwälte

(56) Entgegenhaltungen:
- EP-A- 1 634 783
- DE-A1- 19 512 302
- DE-U-202004 020 033

## Beschreibung

Die Erfindung betrifft eine Fahrzeugwaschanlage mit mindestens einem an Tragmitteln höhenverstellbar gehaltenen Behandlungswerkzeug zum Behandeln eines Fahrzeuges, wobei die Tragmittel jeweils auf eine drehbar gelagerte Wickeleinheit auf- und abwickelbar sind, die einen Wickelkörper zum Aufwikkeln des Tragmittels aufweist, der auf einer drehend antreibbaren Antriebswelle drehfest gehalten ist.

Zum Behandeln eines Fahrzeuges in einer Fahrzeugwaschanlage kommt üblicherweise ein höhenverstellbares Behandlungswerkzeug zum Einsatz, das beispielsweise als Reinigungsbürste, Düsenbalken, Trockner oder dergleichen ausgestaltet sein kann. Das Behandlungswerkzeug ist an Tragmitteln gehalten, die zur Höhenverstellung des Behandlungswerkzeuges jeweils auf eine drehbar gelagerte Wickeleinheit aufgewickelt werden können. Die Wickeleinheit kann von einer Antriebswelle in Drehung versetzt werden, die mit einem Motor gekoppelt ist. Häufig sind derartige Wickeleinheiten in einer Arbeitshöhe von ungefähr drei Meter an einem Portal, einer Stütze oder einem Träger der Fahrzeugwaschanlage gehalten und umfassen einen aus Stahl gefertigten Wickelkörper, der mit der Antriebswelle drehfest verbunden ist. Letztere ist üblicherweise als Rundprofil ausgestaltet und zur drehfesten Verbindung kommt eine zwischen dem Wickelkörper und der Antriebswelle angeordnete Passfeder zum Einsatz.

Derartige Fahrzeugwaschanlagen mit mindestens einer Wickeleinheit haben sich in der Praxis bewährt. Allerdings erfordern die Wickeleinheiten einen nicht unerheblichen Aufwand bei der Herstellung, Montage und Wartung der Fahrzeugwaschanlagen.

Dokument DE-A-195 12 302 offenbart die Gegenstand des Oberbegriffs des Anspruchs 1.

Aufgabe der Erfindung ist es, eine Fahrzeugwaschanlage der eingangs genannten Art derart auszugestalten, dass deren Herstellungs-, Montage- und Wartungsaufwand reduziert werden kann.

Diese Aufgabe wird bei einer Fahrzeugwaschanlage der gattungsgemäßen Art erfindungsgemäß dadurch gelöst, dass die Antriebswelle ein Mehrkantprofil aufweist und der Wickelkörper ein die Antriebswelle formschlüssig aufnehmendes Aufnahmeteil mit einer dem Mehrkantprofil entsprechenden Innenkontur umfasst und aus Kunststoff gefertigt ist.

Überraschenderweise hat sich gezeigt, dass der Wickelkörper aus Kunststoff gefertigt werden kann, sofern die Antriebswelle ein Mehrkantprofil aufweist und der Wickelkörper ein Aufnahmeteil mit einer dem Mehrkantprofil entsprechenden Innenkontur umfasst, so dass das Aufnahmeteil die Antriebswelle formschlüssig aufnehmen kann. Dies ermöglicht eine zuverlässige Drehmomentübertragung zwischen der Antriebswelle und dem Wickelkörper. Eine derartige Drehmomentübertragung stellt sicher, dass das Behandlungswerkzeug über das Tragmittel zuverlässig in unterschiedlicher Höhe entsprechend der Kontur des zu reinigenden Fahrzeugs am Wickelkörper gehalten werden kann, der drehfest mit der Antriebswelle verbunden ist. Trotz dieser starken mechanischen Belastung kann der Wickelkörper aus Kunststoff gefertigt werden. Dies hat eine erhebliche Reduzierung des Gewichtes des Wickelkörpers zur Folge, so dass dieser mit geringerem Montageaufwand beispielsweise an einem Portal, einer Stütze oder einem Träger befestigt werden kann. Auch der Aufwand zur Herstellung und Wartung kann dadurch reduziert werden.

Als Kunststoffmaterial für den Wickelkörper kommt vorzugsweise ein Polyamid-Material zum Einsatz, das bevorzugt faserverstärkt ist.

Günstig ist es, wenn die Antriebswelle ein Vierkantprofil und das Aufnahmeteil eine dem Vierkantprofil entsprechende Innenkontur aufweist. Das Vierkantprofil ermöglicht eine besonders zuverlässige Drehmomentübertragung und die vom Behandlungswerkzeug über das Tragmittel auf den Wickelkörper ausgeübte Zugbelastung kann zuverlässig von diesem aufgenommen werden.

Von Vorteil ist es, wenn der Wickelkörper einen Wickelring umfasst, auf den das Tragmittel aufwickelbar ist, und das Aufnahmeteil als Aufnahmering ausgebildet ist, wobei der Wickelring über eine Vielzahl von Stützrippen einstückig mit dem Aufnahmering verbunden ist.

Günstigerweise sind der Wickelring und der Aufnahmering in sich geschlossen. Dies ermöglicht eine besonders belastbare Ausgestaltung des aus Kunststoff gefertigten Wickelkörpers.

Bei einer besonders bevorzugten Ausführungsform weist der Wickelkörper einen ersten und einen zweiten Satz von Stützrippen auf, wobei die Stützrippen des ersten Satzes bezogen auf die Drehachse der Wickeleinheit im Wesentlichen radial ausgerichtet sind und die Stützrippen des zweiten Satzes einander benachbarte Stützrippen des ersten Satzes einstückig miteinander verbinden. Die Stützrippen des ersten Satzes sind nach Art von Speichen ausgebildet, die den die Antriebswelle aufnehmenden Aufnahmering einstückig mit dem Wikkelring verbinden, auf den das Tragmittel aufgewickelt werden kann. Die Stützrippen des zweiten Satzes verbinden einander benachbarte Stützrippen des ersten Satzes. Die Stützrippen des zweiten Satzes verlaufen somit in Umfangsrichtung bezogen auf die Drehachse der Winkeleinheit. Die beiden Sätze von Stützrippen bilden zusammen mit dem zentralen Aufnahmering und dem außenliegenden Wickelring ein einstückiges Kunststoffformteil, das eine sehr hohe mechanische Belastbarkeit aufweist.

Von Vorteil ist es, wenn die Stützrippen des zweiten Satzes im Abstand zu den Stirnseiten des Wickelkörpers angeordnet sind. Besonders günstig ist es, wenn die Stützrippen des zweiten Satzes in unterschiedlicher Position bezogen auf die axiale Richtung der Wickeleinheit angeordnet sind. Zumindest einige der Stützrippen des zweiten Satzes können in Umfangsrichtung der Wickeleinheit aneinander anschließen und eine sich in Umfangsrichtung zumindest über einen Teilbereich kontinuierlich erstreckende Stützkontur zwischen dem zentralen Aufnahmering und dem außenliegenden Wickelring ausbilden.

Als vorteilhaft hat es sich erwiesen, wenn die Wickeleinheit mindestens eine am Wickelkörper angeordnete Führungswange umfasst zur seitlichen Führung des Tragmittels. Die Führungswange kann beispielsweise scheibenförmig ausgestaltet sein.

Eine weitere Verringerung des Herstellungs-, Montage- und Wartungsaufwandes der erfindungsgemäßen Fahrzeugwaschanlage wird bei einer bevorzugten Ausgestaltung dadurch erzielt, dass auch die mindestens eine Führungswange aus Kunststoff gefertigt ist. Dies hat eine zusätzliche Gewichtsreduktion der Wickeleinheit zur Folge und erleichtert deren Montage in einer Arbeitshöhe von üblicherweise etwa drei Metern.

Von besonderem Vorteil ist es, wenn der Wickelkörper und die mindestens eine Führungswange gemeinsam ein einstückiges Kunststoffformteil ausbilden. Das Kunststoffformteil ist vorzugsweise als faserverstärktes Spritzgussteil ausgestaltet. Dies ermöglicht eine besonders kostengünstige Herstellung der Wickeleinheit.

Das auf der Wickeleinheit aufwickelbare Tragmittel, vorzugsweise ein Tragriemen oder auch ein Tragseil, wird mit einem Ende an der Wickeleinheit festgelegt. Bei einer vorteilhaften Ausführungsform ist vorgesehen, dass die Wickeleinheit zumindest eine mit dem Wickelkörper verbundene Klemmbacke aufweist zum Verklemmen eines Endstückes des Tragmittels mit dem Wickelkörper. Das Tragmittel kann somit zwischen die Klemmbacke und den Wickelkörper eingeklemmt werden. Da die Klemmbacke mit dem Wickelkörper verbunden ist, kann das Tragmittel auf einfache Weise am Wickelkörper festgelegt werden, ohne dass hierzu ein beachtlicher Montageaufwand erforderlich ist.

Zur Verbindung der Klemmbacke mit dem Wickelkörper kommt bei einer bevorzugten Ausgestaltung der Erfindung ein Filmscharnier zum Einsatz, über das die Klemmbacke, die bei einer derartigen Ausführungsform aus Kunststoff gefertigt ist, mit dem Wickelkörper verbunden ist. Klemmbacke und Wickelkörper bilden somt ein einstückiges Kunststoffformteil und lassen sich kostengünstig herstellen. Das Filmscharnier zwischen der Klemmbacke und dem Wikkelkörper stellt sicher, dass die Klemmbacke auf einfache Weise um eine parallel zur Drehachse der Wickeleinheit ausgerichtete Schwenkachse verschwenkt werden kann, um das Endstück des Tragmittels mit dem Wickelkörper zu verklemmen.

Vorteilhaft ist es, wenn die Klemmbacke seitlich neben dem Wickelkörper angeordnet ist, wobei das Endstück des Tragmittels zwischen die Klemmbacke und den Wickelkörper einklemmbar ist und die Klemmbacke zusammen mit dem Wickelkörper vom Tragmittel umschlingbar ist. Durch das Umschlingen der Klemmbacke und des Wickelkörpers kann auf konstruktiv einfache Weise sichergestellt werden, dass das Endstück des Tragmittels zuverlässig am Wikkelkörper gehalten ist, da die vom Tragmittel ausgeübte Zugkraft die Klemmbacke gegen den Wickelkörper drückt. Zum Verklemmen des Tragmittels ist es lediglich erforderlich, dass das Tragmittel den Wickelkörper und die mindestens eine seitlich neben ihm angeordnete Klemmbacke gemeinsam umschlingt. Durch die Umschlingung wird die Klemmbacke mit einer radial nach innen gerichteten Kraft beaufschlagt, so dass das zwischen der Klemmbacke und dem Wickelkörper angeordnete Endstück des Tragmittels auf einfache Weise eingeklemmt werden kann, ohne dass zusätzliche Klemmmittel, beispielsweise Klemmschrauben, zum Einsatz kommen müssen. Die auf das Endstück einwirkende Klemmkraft passt sich hierbei automatisch an die Zugkraft des Tragmittels an.

Eine besonders zuverlässige Halterung des Tragmittels am Wickelkörper wird bei einer vorteilhaften Ausgestaltung dadurch erzielt, dass der Wickelkörper und die mindestens eine Klemmbacke zwischen sich einen Klemmschlitz definieren, wobei der Wickelkörper und/oder die Klemmbacke im Bereich des Klemmschlitzes reibungserhöhende Vorsprünge aufweisen. Die Vorsprünge können in das in den Klemmschlitz eingeführte Endstück des Tragmittels eingreifen und dadurch das Endstück im Klemmschlitz mechanisch festlegen.

Vorzugsweise sind am Wickelkörper zwei Klemmbacken spiegelsymmetrisch zueinander angeordnet. Dies hat den Vorteil, dass die erfindungsgemäße Wikkeleinheit bei gleicher Aufwickelrichtung des Tragmittels sowohl in einer ersten Ausrichtung als auch in einer zweiten, um 180° gedrehten Ausrichtung auf der Antriebsachse montiert werden kann. Die Einsatzmöglichkeiten der Wickeleinheit werden dadurch erhöht. Dies ermöglicht eine Herstellung in großen Stückzahlen, wodurch die Stückkosten reduziert werden können.

Um auf einfache Weise prüfen zu können, ob das Endstück des Tragmittels in einen Klemmschlitz eingefügt ist, ist es bei Einsatz von mindestens einer Führungswange von Vorteil, wenn die Führungswange in ihrem der mindestens einen Klemmbacke benachbarten Bereich eine Sichtöffnung aufweist. Der Klemmschlitz ist dadurch auf der dem Wickelkörper abgewandten Seite der Führungswange durch die Sichtöffnung hindurch gut erkennbar. Zur Prüfung der einwandfreien Festlegung des Tragmittels an der Wickeleinheit müssen also keine Bauteile demontiert werden.

Üblicherweise ist das höhenverstellbare Behandlungswerkzeug mit Hilfe von zwei Tragmitteln, beispielsweise zwei Tragriemen, an einem Portal oder an Stützen oder Trägern oder dergleichen gehalten, wobei jedes Tragmittel auf eine Wickeleinheit auf- und abwickelbar ist. Die Wickeleinheiten können zum Beispiel jeweils am oberen Ende einer Stütze der Fahrzeugwaschanlage angeordnet sein, und ein gemeinsamer Antriebsmotor kann über mechanische Übertragungselemente jeweils mit einer Antriebswelle verbunden sein, die eine Wickeleinheit durchgreift. Von besonderem Vorteil ist es jedoch, wenn die beiden Wickeleinheiten stirnseitig aneinander anliegen und eine gemeinsame Wikkeltrommel ausbilden, die die beiden Tragmittel aufnimmt und von einer gemeinsamen Antriebswelle durchgriffen wird.

Günstig ist es, wenn die Fahrzeugwaschanlage zwei identisch ausgestaltete und stirnseitig miteinander verbundene Wickeleinheiten umfasst, die an den einander zugewandten Stirnseiten Verbindungsmittel zur drehfesten Verbindung der beiden Wickeleinheiten tragen. Eine derartige Ausgestaltung hat den Vorteil, dass identisch ausgebildete Wickeleinheiten zum Einsatz kommen können, die stirnseitig unmittelbar miteinander verbunden werden können zur Ausbildung einer Wickeltrommel. Die identische Ausgestaltung der Wickeleinheiten verringert die Kosten für die Lagerhaltung der Wickeleinheiten und auch deren Herstellungskosten, da diese in größerer Stückzahl mit identischen Werkzeugen hergestellt werden können.

Vorzugsweise umfassen die Verbindungsmittel der Wickeleinheiten an die Wikkelkörper stirnseitig angeformte Rasthaken und zugeordnete Rastaufnahmen. Zur Verbindung von zwei Wickeleinheiten können diese somit auf einfache Weise zusammengesteckt werden, wobei die Rasthaken des einen Wickelkörpers in zugeordnete Rastaufnahmen des anderen Wickelkörpers einrasten.

An den einander abgewandten Stirnseiten tragen die miteinander verbundenen Wickelkörper bevorzugt jeweils eine Führungswange.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer erfindungsgemäßen Fahrzeugwaschanlage ;
- Figur 2:: eine vergrößerte Darstellung einer Wickeleinrichtung der Fahrzeugwaschanlage aus Figur 1;
- Figur 3:: eine vergrößerte Darstellung einer Wickeleinheit der Wickeleinrichtung aus Figur 2 ohne Tragmittel;
- Figur 4:: eine Schnittansicht der Wickeleinheit aus Figur 3 senkrecht zu deren Drehachse;
- Figur 5:: eine Schnittansicht längs der Linie 5-5 in Figur 4 ohne Tragmittel.

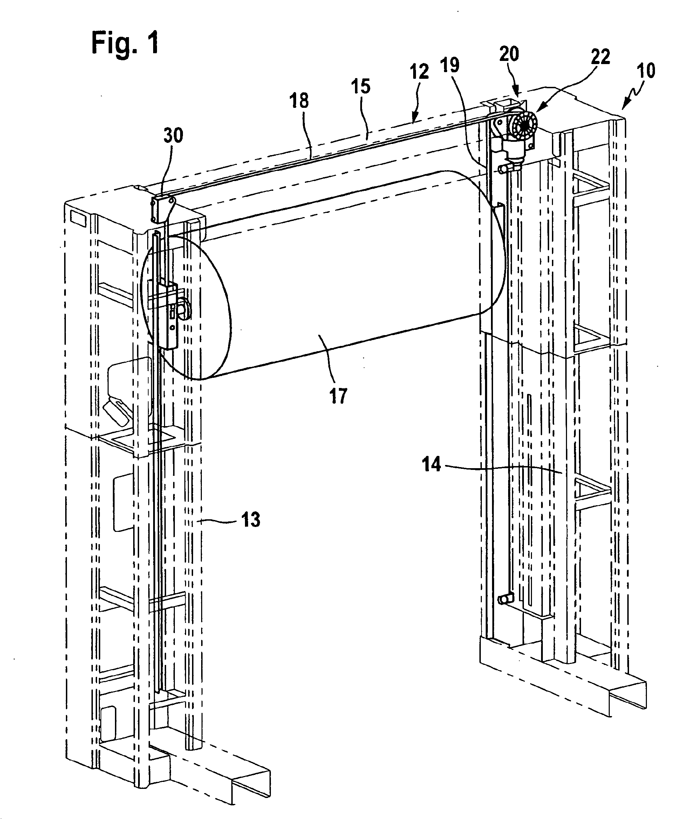

In Figur 1 ist schematisch eine erfindungsgemäße Fahrzeugwaschanlage 10 dargestellt mit einem Portal 12, das zwei Stützen 13, 14 aufweist, die an ihrem oberen Ende über eine Traverse 15 miteinander verbunden sind. Unterhalb der Traverse 15 ist zwischen den beiden Stützen 13, 14 ein Behandlungswerkzeug in Form einer Reinigungsbürste 17 höhenverstellbar gehalten. Zur Halterung der Reinigungsbürste 17 kommen aufwickelbare Tragmittel zum Einsatz in Form eines ersten Tragriemens 18 und eines zweiten Tragriemens 19, die mit einer am oberen Ende der Stütze 14 angeordneten Wickeleinrichtung 20 verbunden sind. Die Wickeleinrichtung 20 umfasst eine Wickeltrommel 22, die von zwei identisch ausgestalteten Wickeleinheiten 24, 25 gebildet ist, sowie einen Antriebsmotor 27, der eine Antriebswelle 28 antreibt, die die Wickeltrommel 22 durchgreift.

Ausgehend von einer Stirnseite der Reinigungsbürste 17 verläuft der erste Tragriemen 18 zunächst vertikal entlang der Stütze 13, wird dann an einer ersten Umlenkrolle 30 horizontal umgelenkt, um anschließend entlang der Traverse 15 zu verlaufen. Am oberen Ende der Stütze 14 trifft der erste Tragriemen 18 auf eine Führungsrolle 31 und wird von dieser zur Wickeleinheit 25 geführt. Der zweite Tragriemen 19 geht aus von der anderen Stirnseite der Reinigungsbürste 17 und verläuft vertikal entlang der Stütze 14 bis zu einer zweiten Umlenkrolle 32, an der er in Richtung der Wickeleinheit 24 umgelenkt wird. Die beiden Tragriemen 18, 19 können somit auf die Wickeltrommel 22 der Wickeleinrichtung 20 aufgewickelt und von dieser bedarfsweise auch wieder abgewickelt werden, um die Reinigungsbürste 17 entsprechend der Kontur eines zu reinigenden Fahrzeugs, das zur Erzielung einer besseren Übersicht in der Zeichnung nicht dargestellt ist, in einer gewünschten Höhe zu positionieren. Zum Aufwickeln der Tragriemen 18, 19 kann die Wickeltrommel 20 vom Antriebsmotor 27 über die Antriebswelle 28 in Drehung versetzt werden. Der erste Tragriemen 18 wird auf die Wickeleinheit 25 aufgewickelt und der zweite Tragriemen 19 wird auf die Wickeleinheit 24 aufgewickelt. Die beiden Wickeleinheiten 24, 25 sind identisch ausgebildet und stirnseitig über eine Rastverbindung miteinander verbunden. Dies wird nachfolgend näher erläutert. Sie sind koaxial zueinander ausgerichtet und werden von der Antriebswelle 28 durchgriffen.

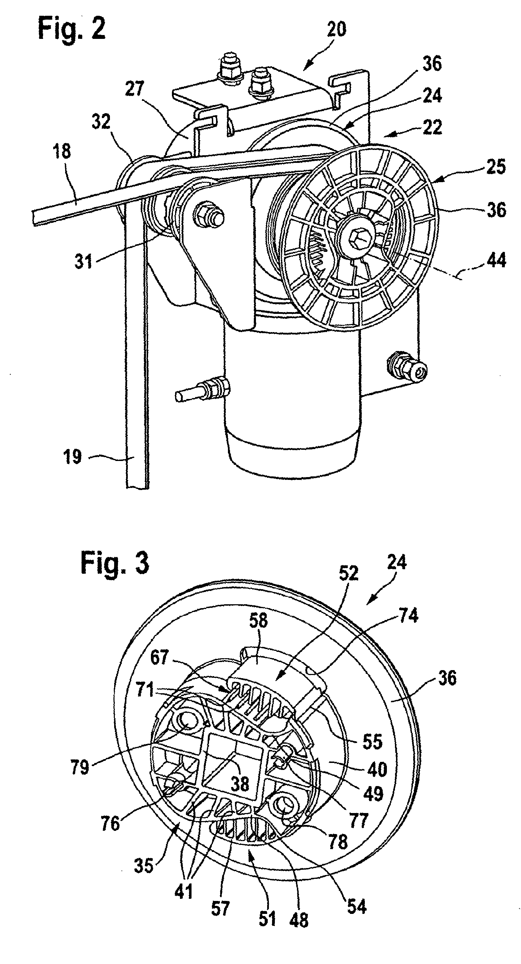

Die Wickeleinheiten 24, 25 sind jeweils als einstückiges Kunststoffformteil ausgestaltet und identisch ausgebildet. In den Figuren 3, 4 und 5 werden die Wikkeleinheiten am Beispiel der Wickeleinheit 24 näher erläutert. Die nachfolgenden Ausführungen zur Wickeleinheit 24 gelten jedoch in entsprechender Weise auch für die Wickeleinheit 25.

Wie insbesondere aus Figur 3 deutlich wird, umfasst die Wickeleinheit 24 einen Wickelkörper 35, auf den das zweite Tragmittel 19 aufgewickelt werden kann, sowie eine an einer Stirnseite des Wickelkörpers 35 angeordnete Führungswange 36 zur seitlichen Führung des zweiten Tragriemens 19. Die Führungswange 36 ist in Form einer flachen Scheibe ausgestaltet, von der der Wickelkörper 35 absteht. Letzterer umfasst ein zentrales Aufnahmeteil in Form eines Aufnahmeringes 38, der von der Antriebswelle 28 durchgriffen ist. Die Antriebswelle 28 ist in Form eines Vierkantprofiles ausgebildet und der Aufnahmering 38 weist eine dem Vierkantprofil entsprechende Innenkontur auf, so dass die Antriebswelle 28 mit dem Aufnahmering 38 formschlüssig verbunden ist.

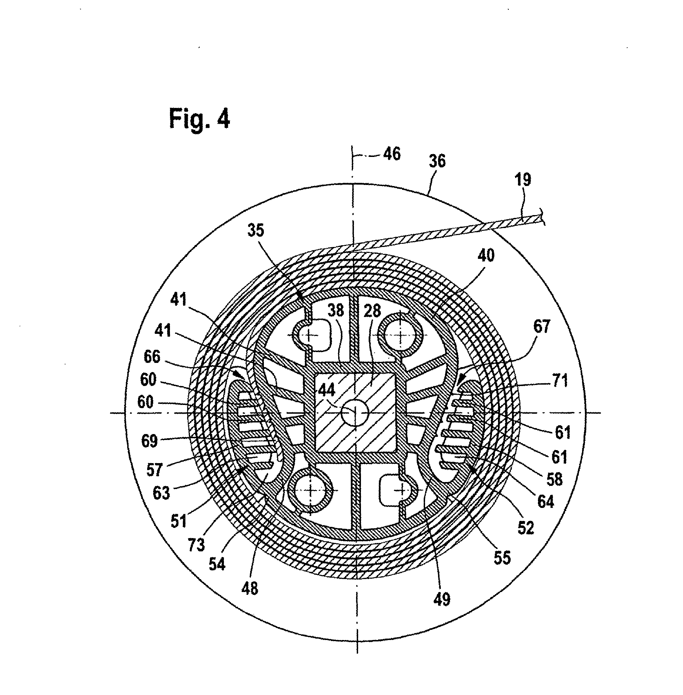

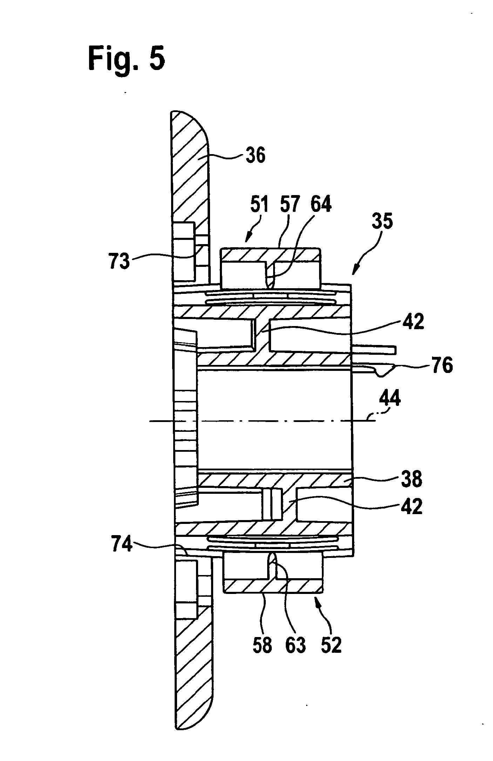

Der Wickelkörper 35 weist außerdem einen Wickelring 40 auf, der den Aufnahmering 38 in Umfangsrichtung umgibt und über einen ersten Satz von Stützrippen 41 (siehe Figuren 3 und 4) und einen zweiten Satz von Stützrippen 42 (siehe Figur 5) einstückig mit dem Aufnahmering 38 verbunden ist. Die Stützrippen 41 des ersten Satzes verlaufen im Wesentlichen in radialer Richtung bezogen auf die Drehachse 44 der Wickeleinheit 24, und die Stützrippen 42 des zweiten Satzes verbinden einander benachbarte Stützrippen 41 des ersten Satzes und verlaufen im Wesentlichen in Umfangsrichtung. Die Stützrippen 42 des zweiten Satzes sind ungefähr parallel zur Führungswange 36 ausgerichtet und nehmen in axialer Richtung Positionen ein zwischen den Stirnseiten des Wickelkörpers 35.

An seiner Außenseite weist der Wickelring 40 zwei symmetrisch zu einer mittigen Spiegelebene 46 ausgestaltete Einformungen 48, 49 auf, in denen jeweils eine Klemmbacke 51 bzw. 52 angeordnet ist. Die Klemmbacken 51 und 52 sind jeweils über ein Filmscharnier 54 bzw. 55 einstückig mit dem Wickelkörper 35 verbunden und weisen eine bogenförmige Außenwand 57 bzw. 58 auf, die sich in die Außenkontur des Wickelringes 40 einfügt und von der im Wesentlichen senkrecht zur Spiegelebene 46 ausgerichtete Klemmrippen 60 bzw. 61 nach innen abstehen. Zwischen den Klemmrippen 60 und 61 verläuft in axialer Richtung mittig jeweils eine parallel zur Führungswange 36 ausgerichtete Verstärkungsrippe 63 bzw. 64.

Die Klemmbacken 51 und 52 sind mittels der Filmscharniere 54, 55 um parallel zur Drehachse 44 ausgerichtete Schwenkachsen verschwenkbar und definieren zwischen sich und dem Wickelkörper 35 jeweils einen Klemmschlitz 66 bzw. 67 zum Einklemmen eines Endstückes des zweiten Tragriemens 19. Bei der in Figur 4 dargestellten Ausgestaltung ist das Endstück 69 des zweiten Tragriemens 19 in den Klemmschlitz 66 zwischen der Klemmbacke 51 und dem Wikkelkörper 35 eingeklemmt. Im Bereich der Klemmschlitze 66 und 67 weist der Wickelring 40 außenseitig eine Vielzahl von zackenartigen Vorsprüngen 71 auf, die beim Verklemmen des Endstückes 66 in dieses eingreifen.

Wie bereits erläutert, kann der zweite Tragriemen 19 auf den Wickelkörper 35 aufgewickelt werden. Das Endstück 69 des zweiten Tragriemens 19 wird vom Klemmschlitz 66 aufgenommen, und der zweite Tragriemen 19 umschlingt den Wickelkörper 35 und die Klemmbacken 51, 52. Dies hat zur Folge, dass die vom zweiten Tragriemen 19 auf die Wickeleinheit 24 ausgeübte Zugkraft das Endstück 69 zuverlässig zwischen die Klemmbacke 51 und den Wickelring 40 einklemmt. Der zweite Tragriemen 19 ist somit ohne zusätzliche Werkzeuge zuverlässig an der Wickeleinheit 24 festgelegt.

In Höhe der Klemmbacken 51 und 52 weist die Führungswange 36 jeweils eine Sichtöffnung 73 bzw. 74 auf, durch die das Endstück 69 von außen gut erkennbar ist. Es kann also auf einfache Weise geprüft werden, ob das Endstück 69 vollständig in den Klemmschlitz 66 eingesetzt ist, ohne dass hierzu die Wikkeleinheit 24 demontiert werden muss.

Auf seiner der Führungswange 36 abgewandten Stirnseite trägt der Wickelkörper 35 Verbindungselemente in Form zweier Rasthaken 76, 77 und in Form zweier Rastaufnahmen 78, 79. Dies ermöglicht es auf konstruktiv einfache Weise, die identisch ausgestalteten Wickeleinheiten 24, 25 stirnseitig miteinander zu verrasten, ohne dass zusätzliche Werkzeuge erforderlich sind. Die beiden Wickeleinheiten 24, 25 bilden in ihrer Gesamtheit die Wickeltrommel 22 aus, die auf die Antriebswelle 28 aufgesetzt ist.

Da die beiden Wickeleinheiten 24, 25 jeweils als faserverstärktes Spritzgussteil ausgebildet sind, sind sie kostengünstig herstellbar und weisen nur ein verhältnismäßig geringes Gewicht auf. Sie lassen sich an der Antriebswelle 28 in einer Arbeitshöhe von typischerweise drei Meter auf einfache Weise montieren und warten. Trotz ihrer Ausgestaltung als Kunststoffformkörper kann an den Wickeleinheiten 24, 25 die Reinigungsbürste 17 über die beiden Tragriemen 18 und 19 zuverlässig in beliebiger Höhe gehalten werden, ohne dass hierzu zusätzliche Arretierungsmittel erforderlich sind. Die Fahrzeugwaschanlage 10 zeichnet sich daher durch eine große Herstellungs-, Montage- und Wartungsfreundlichkeit aus.

## Patentansprüche

1. Fahrzeugwaschanlage (10) mit mindestens einem an Tragmitteln (18, 19) höhenverstellbar gehaltenen Behandlungswerkzeug zum Behandeln eines Fahrzeuges, wobei die Tragmittel jeweils auf eine drehbar gelagerte Wickeleinheit (25) auf- und abwickelbar sind, die einen Wickelkörper (35) zum Aufwickeln des Tragmittels aufweist, der auf einer drehend antreibbaren Antriebswelle drehfest gehalten ist, **dadurch gekennzeichnet, dass** die Antriebswelle (28) ein Mehrkantprofil aufweist und der Wickelkörper (35) ein die Antriebswelle (28) formschlüssig aufnehmendes Aufnahmeteil (38) mit einer dem Mehrkantprofil entsprechenden Innenkontur umfasst und aus Kunststoff gefertigt ist.

2. Fahrzeugwaschanlage nach Anspruch 1, **dadurch gekennzeichnet, dass** die Antriebswelle (28) ein Vierkantprofil aufweist und das Aufnahmeteil (38) eine dem Vierkantprofil entsprechende vierkantförmige Innenkontur aufweist.

3. Fahrzeugwaschanlage nach Anspruch 1 oder 2, **dadurch gekennzeichnet, dass** der Wickelkörper (35) einen Wickelring (40) umfasst, auf den das Tragmittel (19) aufwickelbar ist, und dass das Aufnahmeteil als Aufnahmering (38) ausgebildet ist, wobei der Wickelring (40) über eine Vielzahl von Stützrippen (41, 42) einstückig mit dem Aufnahmering (38) verbunden ist.

4. Fahrzeugwaschanlage nach einem der voranstehenden Ansprüche, **dadurch gekennzeichnet, dass** der Wickelkörper (35) einen ersten und einen zweiten Satz von Stützrippen (41, 42) aufweist, wobei die Stützrippen (41) des ersten Satzes bezogen auf die Drehachse (44) der Wickeleinheit (24) im Wesentlichen radial ausgerichtet sind und die Stützrippen (42) des zweiten Satzes einander benachbarte Stützrippen (41) des ersten Satzes einstückig miteinander verbinden.

5. Fahrzeugwaschanlage nach Anspruch 4, **dadurch gekennzeichnet, dass** die Stützrippen (42) des zweiten Satzes im Abstand zu den Stirnseiten des Wickelkörpers (35) angeordnet sind.

6. Fahrzeugwaschanlage nach einem der voranstehenden Ansprüche, **dadurch gekennzeichnet, dass** am Wickelkörper (35) mindestens eine Führungswange (36) zur seitlichen Führung des Tragmittels (19) angeordnet ist.

7. Fahrzeugwaschanlage nach Anspruch 6, **dadurch gekennzeichnet, dass** die mindestens eine Führungswange (36) aus Kunststoff gefertigt ist.

8. Fahrzeugwaschanlage nach Anspruch 7, **dadurch gekennzeichnet, dass** der Wickelkörper (35) und die mindestens eine Führungswange (36) gemeinsam ein einstückiges Kunststoffformteil ausbilden.

9. Fahrzeugwaschanlage nach einem der voranstehenden Ansprüche, **dadurch gekennzeichnet, dass** die Wickeleinheit (24) zumindest eine mit dem Wickelkörper (35) verbundene Klemmbacke (51, 52) aufweist zum Verklemmen eines Endstückes (69) des Tragmittels (19) mit dem Wikkelkörper (35).

10. Fahrzeugwaschanlage nach Anspruch 9, **dadurch gekennzeichnet, dass** die mindestens eine Klemmbacke (51, 52) aus Kunststoff gefertigt und über ein Filmscharnier (54, 55) einstückig mit dem Wickelkörper (35) verbunden ist.

11. Fahrzeugwaschanlage nach Anspruch 9 oder 10, **dadurch gekennzeichnet, dass** die Klemmbacke (51, 52) seitlich neben dem Wickelkörper (35) angeordnet ist, wobei das Endstück (69) des Tragmittels (19) zwischen die Klemmbacke (51, 52) und den Wickelkörper (35) einklemmbar ist und die Klemmbacke (51, 52) zusammen mit dem Wickelkörper (35) vom Tragmittel (19) umschlingbar ist.

12. Fahrzeugwaschanlage nach Anspruch 9, 10 oder 11, **dadurch gekennzeichnet, dass** der Wickelkörper (35) und die mindestens eine Klemmbacke (51, 52) zwischen sich einen Klemmschlitz (66, 67) definieren, wobei der Wickelkörper (35) und/oder die Klemmbacke (51, 52) im Bereich des Klemmschlitzes (66, 67) reibungserhöhende Vorsprünge (71) aufweisen.

13. Fahrzeugwaschanlage nach einem der Ansprüche 9 bis 12, **dadurch gekennzeichnet, dass** am Wickelkörper (35) zwei spiegelsymmetrisch zueinander ausgestaltete Klemmbacken (51, 52) angeordnet sind.

14. Fahrzeugwaschanlage nach einem der Ansprüche 9 bis 13, **dadurch gekennzeichnet, dass** am Wickelkörper (35) zumindest eine Führungswange (36) angeordnet ist, die in ihrem der mindestens einen Klemmbacke (51, 52) benachbarten Bereich eine Sichtöffnung (73, 74) aufweist.

15. Fahrzeugwaschanlage nach einem der voranstehenden Ansprüche, **dadurch gekennzeichnet, dass** die Fahrzeugwaschanlage (10) zwei Wikkeleinheiten (24, 25) aufweist, die stirnseitig aneinander anliegen und eine Wickeltrommel (22) ausbilden, wobei die Wickeltrommel (22) zwei Tragmittel (18, 19) aufnimmt und von einer Antriebswelle (28) durchgriffen ist.

16. Fahrzeugwaschanlage nach einem der voranstehenden Ansprüche, **dadurch gekennzeichnet, dass** die Fahrzeugwaschanlage (10) zwei identisch ausgestaltete und stirnseitig miteinander verbundene Wickeleinheiten (24, 25) umfasst, die an den einander zugewandten Stirnseiten Verbindungsmittel (76, 77, 78, 79) zur drehfesten Verbindung der Wickeleinheiten (24, 25) tragen.

17. Fahrzeugwaschanlage nach Anspruch 16, **dadurch gekennzeichnet, dass** die Verbindungsmittel an die Wickelkörper (35) stirnseitig angeformte Rasthaken (76, 77) und zugeordnete Rastaufnahmen (78, 79) umfassen.

18. Fahrzeugwaschanlage nach Anspruch 16 oder 17, **dadurch gekennzeichnet, dass** die Wickeleinheiten (24, 25) an den einander abgewandten Stirnseiten jeweils eine Führungswange (36) tragen.

## Claims

1. Vehicle washing installation (10) with at least one treatment tool held height-adjustably on carrying means (18, 19) for treating a vehicle, the carrying means being each windable onto and off a rotatably mounted winding unit (25), which comprises a winding body (35) for winding up the carrying means, which is rotationally fixedly held on a rotationally drivable drive shaft, **characterized in that** the drive shaft (28) has a polygonal profile, and the winding body (35) comprises a receiving part (38) with an inner contour corresponding to the polygonal profile for receiving the drive shaft (28) with positive locking and is made of a plastic material.

2. Vehicle washing installation in accordance with claim 1, **characterized in that** the drive shaft (28) has a four-edged profile, and the receiving part (38) has a four-edged inner contour corresponding to the four-edged profile.

3. Vehicle washing installation in accordance with claim 1 or 2, **characterized in that** the winding body (35) comprises a winding ring (40) onto which the carrying means (19) is windable, and **in that** the receiving part is configured as a receiving ring (38), the winding ring (40) being integrally connected to the receiving ring (38) by a plurality of supporting ribs (41, 42).

4. Vehicle washing installation in accordance with any one of the preceding claims, **characterized in that** the winding body (35) comprises a first and a second set of supporting ribs (41, 42), the supporting ribs (41) of the first set being aligned substantially radially in relation to the axis of rotation (44) of the winding unit (24), and the supporting ribs (42) of the second set integrally interconnecting adjacent supporting ribs (41) of the first set.

5. Vehicle washing installation in accordance with claim 4, **characterized in that** the supporting ribs (42) of the second set are arranged in spaced relation to the end faces of the winding body (35).

6. Vehicle washing installation in accordance with any one of the preceding claims, **characterized in that** at least one guide cheek (36) is arranged on the winding body (35) for lateral guidance of the carrying means (19).

7. Vehicle washing installation in accordance with claim 6, **characterized in that** the at least one guide cheek (36) is made of a plastic material.

8. Vehicle washing installation in accordance with claim 7, **characterized in that** the winding body (35) and the at least one guide check (36) jointly form an integral plastic moulded part.

9. Vehicle washing installation in accordance with any one of the preceding claims, **characterized in that** the winding unit (24) comprises at least one clamping jaw (51, 52) connected to the winding body (35) for clamping an end piece (69) of the carrying means (19) to the winding body (35).

10. Vehicle washing installation in accordance with claim 9, **characterized in that** the at least one clamping jaw (51, 52) is made of a plastic material and is integrally connected to the winding body (35) by a film hinge (54, 55).

11. Vehicle washing installation in accordance with claim 9 or 10, **characterized in that** the clamping jaw (51, 52) is arranged laterally next to the winding body (35), the end piece (69) of the carrying means (19) being clampable between the clamping jaw (51, 52) and the winding body (35), and the carrying means (19) being able to wind around the clamping jaw (51, 52) together with the winding body (35).

12. Vehicle washing installation in accordance with claim 9, 10 or 11, **characterized in that** the winding body (35) and the at least one clamping jaw (51, 52) define a clamping slot (66, 67) between them, and the winding body (35) and/or the clamping jaw (51, 52) comprise in the area of the clamping slot (66, 67) projections (71) which increase the friction.

13. Vehicle washing installation in accordance with any one of claims 9 to 12, **characterized in that** two clamping jaws (51, 52) configured in mirror-symmetrical relation to each other are arranged on the winding body (35).

14. Vehicle washing installation in accordance with any one claims 9 to 13, **characterized in that** there is arranged on the winding body (35) at least one guide cheek (36) which has an observation opening (73, 74) in its region adjacent to the at least one clamping jaw (51, 52).

15. Vehicle washing installation in accordance with any one of the preceding claims, **characterized in that** the vehicle washing installation (10) comprises two winding units (24, 25) which lie with their end faces against each other and form a winding drum (22), the winding drum (22) receiving two carrying means (18, 19) and being traversed by a drive shaft (28).

16. Vehicle washing installation in accordance with any one of the preceding claims, **characterized in that** the vehicle washing installation (10) comprises two winding units (24, 25) of identical configuration, which are connected to each other at end faces and carry at the end faces facing each other connection means (76, 77, 78, 79) for rotationally fixed connection of the winding units (24, 25).

17. Vehicle washing installation in accordance with claim 16, **characterized in that** the connection means comprise latching hooks (76, 77) formed on the end faces of the winding bodies (35) and associated latching receptacles (78, 79).

18. Vehicle washing installation in accordance with claim 16 or 17, **characterized in that** the winding units (24, 25) carry at each of the end faces facing away from each other a guide cheek (36).

## Revendications

1. Installation de lavage de véhicules (10), comportant au moins un outil de traitement monté sur des moyens de support (18, 19) de façon réglable en hauteur et destiné à traiter un véhicule, les moyens de support pouvant chacun être enroulés et déroulés sur une unité d'enroulement (24) qui est montée de façon à pouvoir tourner et qui comporte un corps d'enroulement (35) destiné à enrouler le moyen de support associé, lequel corps d'enroulement est monté, de façon fixe en rotation, sur un arbre d'entraînement entraînable en rotation, **caractérisée en ce que** l'arbre d'entraînement (28) présente un profil polygonal, et le corps d'enroulement (35) comporte une pièce de réception (38) recevant par complémentarité de formes l'arbre d'entraînement (28), en présentant un contour intérieur correspondant au profil polygonal, et est réalisé en matière plastique.

2. Installation de lavage de véhicules selon la revendication 1, **caractérisée en ce que** l'arbre d'entraînement (28) présente un profil quadrangulaire, et la pièce de réception (38) présente un contour intérieur quadrangulaire correspondant au profil quadrangulaire.

3. Installation de lavage de véhicules selon la revendication 1 ou 2, **caractérisée en ce que** le corps d'enroulement (35) comporte une bague d'enroulement (40) sur laquelle le moyen de support (19) peut être enroulé, et **en ce que** la pièce de réception est conformée en bague de réception (38), la bague d'enroulement (40) étant reliée d'une seule pièce à la bague de réception (38) par une pluralité de nervures de support (41, 42).

4. Installation de lavage de véhicules selon l'une des revendications précédentes, **caractérisée en ce que** le corps d'enroulement (35) possède des premier et second jeux de nervures de support (41, 42), les nervures de support (41) du premier jeu étant orientées sensiblement radialement par rapport à l'axe de rotation (44) de l'unité d'enroulement (24), et les nervures de support (42) du second jeu reliant entre elles, en étant venues de matière, des nervures de support adjacentes (41) du premier jeu.

5. Installation de lavage de véhicules selon la revendication 4, **caractérisée en ce que** les nervures de support (42) du deuxième jeu sont disposées à distance des faces frontales du corps d'enroulement (35).

6. Installation de lavage de véhicules selon l'une des revendications précédentes, **caractérisée en ce qu'**au moins une joue de guidage (36) est disposée au niveau du corps d'enroulement (35) de façon à guider latéralement le moyen de support (19).

7. Installation de lavage de véhicules selon la revendication 6, **caractérisée en ce que** ladite au moins une joue de guidage (36) est réalisée en matière plastique.

8. Installation de lavage de véhicules selon la revendication 7, **caractérisée en ce que** le corps d'enroulement (35) et ladite au moins une joue de guidage (36) forment ensemble une pièce monobloc en matière plastique moulée.

9. Installation de lavage de véhicules selon l'une des revendications précédentes, **caractérisée en ce que** l'unité d'enroulement (24) possède au moins une mâchoire de serrage (51, 52) qui est reliée au corps d'enroulement (35), et qui est destinée à serrer un tronçon d'extrémité (69) du moyen de support (19) avec le corps d'enroulement (35).

10. Installation de lavage de véhicules selon la revendication 9, **caractérisée en ce que** ladite au moins une mâchoire de serrage (51, 52) est réalisée en matière plastique, et est reliée d'une seule pièce au corps d'enroulement (35) par un film-charnière (54, 55).

11. Installation de lavage de véhicules selon la revendication 9 ou 10, **caractérisée en ce que** la mâchoire de serrage (51, 52) est disposée latéralement à côté du corps d'enroulement (35), le tronçon d'extrémité (69) du moyen de support (19) pouvant être serré entre la mâchoire de serrage (51, 52) et le corps d'enroulement (35), et le moyen de support (19) pouvant s'enrouler autour de la mâchoire de serrage (51, 52) ainsi qu'autour du corps d'enroulement (35).

12. Installation de lavage de véhicules selon la revendication 9, 10 ou 11, **caractérisée en ce que** le corps d'enroulement (35) et ladite au moins une mâchoire de serrage (51, 52) définissent entre eux une fente de serrage (66, 67), le corps d'enroulement (35) et/ou la mâchoire de serrage (51, 52) possédant des saillies (71) augmentant la friction dans la région de la fente de serrage (66, 67).

13. Installation de lavage de véhicules selon l'une des revendications 9 à 12, **caractérisée en ce que** deux mâchoires de serrage (51, 52) agencées en symétrie miroir l'une par rapport à l'autre sont disposées au niveau du corps d'enroulement (35).

14. Installation de lavage de véhicules selon l'une des revendications 9 à 13, **caractérisée en ce qu'**au moins une joue de guidage (36) est disposée au niveau du corps d'enroulement (35), laquelle joue de guidage possède, dans une région de celle-ci adjacente à ladite au moins une mâchoire de serrage (51, 52), une ouverture de visualisation (73, 74).

15. Installation de lavage de véhicules selon l'une des revendications précédentes, **caractérisée en ce que** l'installation de lavage de véhicules (10) possède deux unités d'enroulement (24, 25) qui sont placées frontalement l'une contre l'autre et forment un tambour d'enroulement (22), le tambour d'enroulement (22) recevant deux moyens de support (18, 19) et étant traversé en s'accrochant par un arbre d'entraînement (28).

16. Installation de lavage de véhicules selon l'une des revendications précédentes, **caractérisée en ce que** l'installation de lavage de véhicules (10) comporte deux unités d'enroulement (24, 25) qui sont de conformations identiques, qui sont reliées l'une à l'autre frontalement, et qui supportent au niveau des faces frontales dirigées l'une vers l'autre, des moyens de liaison (76, 77, 78, 79) destinés à relier, de façon fixe en rotation, les unités d'enroulement (24, 25).

17. Installation de lavage de véhicules selon la revendication 16, **caractérisée en ce que** les moyens de liaison comportent des crochets d'encliquetage (76, 77) formés frontalement au niveau des corps d'enroulement (35), et des logements d'encliquetage associés (78, 79).

18. Installation de lavage de véhicules selon la revendication 16 ou 17, **caractérisée en ce que** les unités d'enroulement (24, 25) supportent chacune une joue de guidage (36) au niveau des faces frontales opposées l'une à l'autre.
